# EUROPEAN PATENT SPECIFICATION

(11) **EP 0 533 733 B1**
(45) Date of publication and mention of the grant of the patent: **07.12.1994**
(21) Application number: 91910674.0
(22) Date of filing: 16.05.1991
(51) Int. Cl.: D21C 11/12

(54) **PROCESS FOR THE PARTIAL COMBUSTION OF CELLULOSE SPENT LIQUOR II**
VERFAHREN ZUM TEILVERBRENNEN VON GEBRAUCHTEN ZELLULOSELÖSUNGEN
PROCEDE PERMETTANT LA COMBUSTION PARTIELLE DE LIQUEURS EPUISEES DE CELLULOSE

(30) Priority: 31.05.1990 SE 9001959
(43) Date of publication of application: 31.03.1993
(73) Proprietor: CHEMREC AKTIEBOLAG, S-651 15 Karlstad (SE)
(72) Inventor: STIGSSON, Lars, S-237 00 Bjärred (SE)
(74) Representative: Westerlund, Christer John Axel
(86) International application number: PCT/SE91/00346
(87) International publication number: WO 91/19041

(56) References cited:
- SE-C- 133 379
- US-A- 3 163 495

## Description

### Technical field

The present invention relates to a process for partial combustion of cellulose spent liquors from the cellulose industry using a burner connected to a reactor, while supplying an oxygen containing gas as the oxidant. The burner comprises a liquor lance equipped with a nozzle at its downstream end which supplies liquor and the greater part of the non-fuel related oxygen required for the partial combustion, wherein or in which proximity the oxygen-containing gas is brought into contact with the spent liquor which then disintegrates into a divergent spray.

The object of the present invention is to facilitate partial combustion of cellulose spent liquor through use of a burner creating a stable, self-igniting flame at low air/fuel ratios and elevated pressures.

### Background of the invention

The cellulose industry generates spent liquors differing in composition according to the delignification process used. Within the sulphate pulping industry, spent liquor, commonly referred to as black liquor, contains valuable chemicals and energy in the form of combustible carbonaceous compounds. At the present time these chemicals and energy are normally recovered in a recovery boiler in which the black liquor is completely burned.

SE-C- 133 379 discloses a process for recovery of inorganic components from spent liquors and a boiler for carrying out said process. The known process comprises injection of spent liquor into a combustion chamber to form of a cloud composed of particles of varying size, feeding centrally into the cloud a limited (substoïchometric) amount of primary air for partial combustion in a zone in front of the jet orifice. The still humid coarser particles adsorb the inorganic components remaining from the combustion of the finer particles and settle at the bottom of the combustion chamber after having been dried during their vertical passage through the chamber. In a zone adjacent to the bottom further primary air is fed into the chamber to burn the combustible components of the coase particles accumulatet at the bottom at a comparatively low temperature. It is possible to additionally feed secundary air to a zone located downstream of the injection zone for complete combustion of the gases formed by the combustion with primary air.

The apparatus for carrying out the process of SE-C- 133 379 comprises a combustion chamber, a number of nozzles arranged in the upper part of the chamber for injection of spent liquor to form a cloud of particles of varying size, a number of nozzles for injection of a limited amount primary air in the center of the cloud, a number of nozzles arranges adjacent to the bottom of the chamber for injection of primary air to effect the combustion of the coarse particles accumulated thereon and, optionally, a number of nozzles for injection of secondary air located downstream above the nozzles for injection of spent liquor.

US-A- 3,163,495 discloses a process for recovery of chemicals from black liquor comprising burning the liquour with air in an combustion chamber in an amount to produce a reducing atmosphere under formation of a non-combustible molten product containing metal sulfide and a combustion gas stream, removing the melt from the combustion chamber, passing the thus produced gas stream and additional air through a oxidizing chamber clad with heated highly refractory surfaces while maintaining an oxidising atmosphere at a temperature substantially higher than the temperature maintained in the combustion chamber. Any metallic sulfur compounds entrained in the gas stream are thereby converted to metallic sulfate in molten form while obnoxious fumes are destroyed by complete oxidation of their combustible constituents. The metal sulfate melt is withdrawn from the oxidizing chamber and the combustion gas is used for generating steam by passing it through a steam boiler unit, after which it is scrubbed with an aqueous solution before being vented to the atmosphere.

Partial combustion of black liquor in a gasification reactor as in the present invention generates a combustible gas comprising H₂, CO, CO₂, and droplets of molten inorganic chemicals.

In conjunction with pulp bleaching, a diluted liquor comprising organic matter and sodium is obtained. Mechanical and semi-chemical pulping processes also generate diluted liquors of different compositions. These as well as other waste and spent liquors generated in the cellulose industry can, after concentration, be used as a feedstock in the process of the present invention.

Although the following description describes the present invention as it applies to black liquor it is not restricted only to this particular liquor in its application.

The mechanisms related to partial combustion of black liquor are fairly well understood and are applied inter alia in the tower part of the soda recovery boiler. The difference between the present burner and a liquor burner in a soda recovery boiler is, however, great inter alia due to the low degree of liquor atomization in recovery boiler burners and the absence of a well-defined liquor flame. Another important difference between a recovery boiler burner and the burner of the present invention is that the present burner is primarily intended for gasification at elevated pressures.

A major difference between the burner of the present invention and conventional oil burners is that a stable flame has to be formed with the use of a considerably lower amount of air or oxygen carrier.

As the exemplification below show, black liquor as a fuel is characterized by a relatively low calorific value and high water and ash contents.

| | |
|---|---|
| Calorific value of the dry substance | 13 GJ/ton dry substance (DS) |
| Elementary composition | C₂₉H₃₄O₂₀Na₉S₂ |
| Dry solids content | 65% |
| Viscosity at 100^{o}C | 100 cSt. |

The presence of sodium compounds in the black liquor and its inherently high oxygen content make it a very reactive fuel, which means, provided an adequate burner is at hand that the carbon conversion already in the flame zone becomes high, in spite of the fact that the combustion is substoichiometric.

The degree of atomization of the liquor is of great importance for obtaining a stable black liquor flame, the extension of the flame and high carbon conversion. The rheological properties of the black liquor are of significant importance to the degree of atomization which can be achieved in a given nozzle. The viscosity of the black liquor can be influenced by e.g. heating and/or the addition of additives and normally the black liquor is being heated to above 100^{o}C for use in the present invention. The viscosity of the black liquor at the moment of atomization should preferably be below 200 cSt.

Atomization of the black liquor can be further enhanced by flashing the liquor into the reactor in which case the liquor is preheated to a temperature above its boiling point at the operating pressure of the reactor.

Several types of atomizing nozzles are available but only a few varieties are suitable for atomizing cellulose spent liquors, such as black liquor, in the present invention.

"Twin-fluid" nozzles are most suitable for use in the present burner. A common feature of "twin-fluid" nozzles is that a relatively high gas flow rate is necessary for the supply of energy for the atomization. Another important feature of these nozzles is that the resulting size of the droplets decrease with increasing density of the atomizing gas. Depending on how the two fluid phases are brought together several mechanisms for forming droplets, such as shearing between ligaments, combination and formation of spheres of liquor droplets and high turbulence decomposition of the liquor spray can be anticipated.

### Description of the present invention

The present invention describes a process for efficient substoichiometric combustion of cellulose spent liquors, using a burner connected to a reactor, while supplying an oxygen containing gas, which invention is characterized in that the weight ratio between the oxygen containing gas supplied through the burner and the spent liquor supplied through the burner is lower than 2:1, and that at least half of the oxygen which is required for the partial combustion of the spent liquor is supplied through the burner to the reactor as an oxygen containing gas, said gas being discharged into the reactor through the nozzle.

Efficient atomization of the spent liquor is particularly important and is achieved in the burner of the present invention by direct contact between the spent liquor and the oxygen containing gas at elevated pressure in or directly adjacent to a nozzle designed specifically for the purpose. The spent liquor, which should be preheated to lower the viscosity before being fed to the burner, is supplied to the reactor through the liquor lance. At the downstream end of the liquor lance the liquor is brought into contact with an atomizing gas whereby the liquor flow velocity rapidly increases resulting in the formation of a divergent spray of atomized spent liquor.

As is mentioned above the spent liquor is fuel with unusual properties regarding reactivity and ash and water contents. The spent liquor solids contains a high level of bound oxygen which means that the oxygen which can be supplied through the combustion air is relatively small, particularly for partial combustion.

The oxygen supplied to the reactor corresponds to a stoichiometric ratio of between 0.3 and 0.6 relative to complete combustion of the spent liquor with a preferred ratio of between 0.35 and 0.5. The air, oxygen-enriched air or oxygen to be supplied to the reactor is low in relation to the spent liquor supplied and the weight ratio is lower than 2:1 when operating with air as oxidant and lower than 0.4:1 when operating with oxygen as oxidant. The greater part, and preferably more than 80% of the non-fuel bound oxygen which is required for partial combustion of the spent liquor is supplied to the reactor as an oxygen containing gas which gas is discharged together with the liquor through the nozzle. The flow velocity of the oxygen containing gas in the nozzle should be between 40 m/s and 350 m/s.

The nozzle can be designed with a circular gap or a circular opening for discharge of spent liquor, wherein it is contacted with the high velocity atomizing oxygen containing gas and disintegrates into small droplets forming of a divergent spray. In an alternative design of the nozzle the spent liquor is discharged together with the atomizing gas through three or more symmetrically arranged openings.

The attached drawing shows two different "twin-fluid" nozzles, whereby
FIG. 1 shows an embodiment of a "twin-fluid" nozzle in an axial cross-section;
FIG. 2 shows a front view of the nozzle according to FIG. 1 seen along the line III-III of FIG. 2;
FIG. 3 shows a second embodiment of a "twin-fluid" nozzle in axial cross-section; and
FIG. 4 shows a front view of the nozzle according to FIG. 3 seen along the line V-V of FIG. 3.

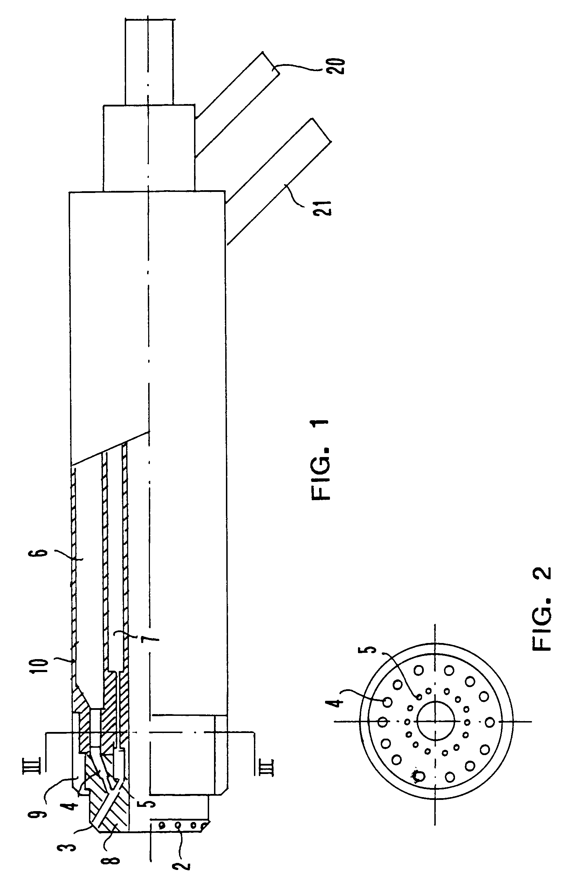

FIGS. 1 and 2 show a twin-fluid nozzle where the liquor and gas are mixed and then forced under high pressure through several symmetrically arranged circular openings 3. These openings are the ends of so called Y-jet atomizing nozzles comprised of two tubes 4 and 5, the former in contact with an outer tube 6 for the purpose of adding black liquor and the later in contact with an inner concentric annular tube 7 for the purpose of adding atomizing gas. The openings 3 diverge, producing divergent atomized jets from the lower part 2 of the liquor lance 1. A hood 9 fitted to the body 10 of the liquor lance, holds the Y-jet atomizer 8 in place. The body 10 encloses the concentric annular tubes 6 and 7. The black liquor is introduced into the liquor lance 1 through an inlet tube 20 and the air through another inlet tube 21.

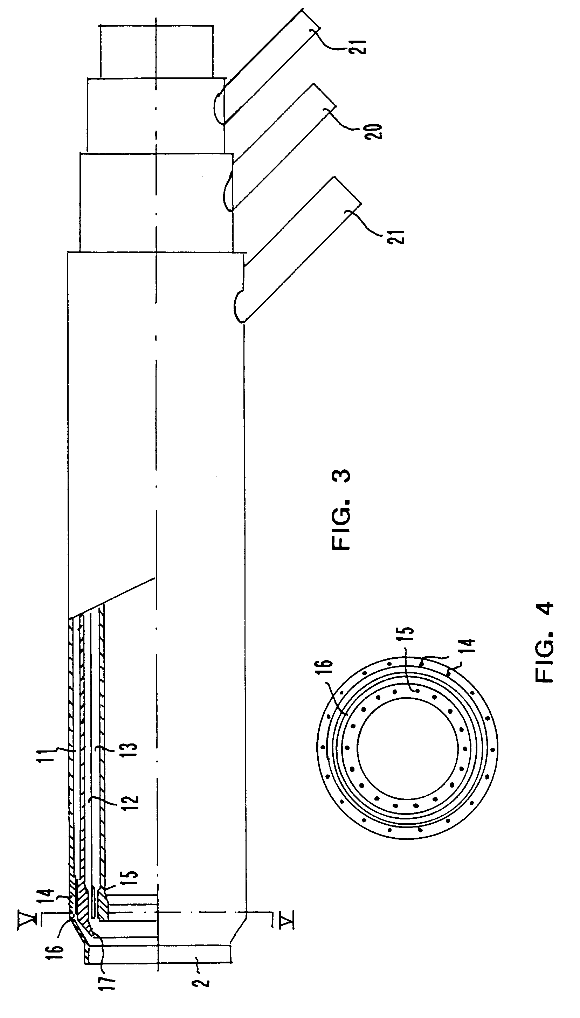

FIGS. 3 and 4 show an embodiment of the burner gun having three concentric annular tubes 11, 12, and 13. Air is fed through the outer and the inner tubes 11, and 13, white black liquor is fed through the intermediate tube 12. The air is divided through the 18 symmetrically distributed holes 14, and 15 shown in the figures, while black liquor is forced through an annular gap 16. The holes 14 are hereby obliquely directed in one direction and the holes 15 obliquely directed in the opposite direction. The black liquor is fed through the gap 16 and meets a lip 17 forcing it in an inward direction. Now in the form of a film the black liquor is met by the air coming through the holes 16 and is atomized. This initial air-black liquor mixture is met by additional air outside the lip 17, creating a diverging jet of finely dispersed black liquor. The black liquor is added to the burner through an inlet tube 20 and the air through two inlet tubes 21.

When designing burners great attention has to be paid to the weight ratio between the oxidant and fuel.

Different fuels contain different amounts of chemically bound oxygen. Bitumenous coal usually contains between 4-10 % of bound oxygen. Fuel oils contain less than 1 % of bound oxygen.

Black liquor dry solids contains about 35 % by weight of bound oxygen calculated on dry matter. This affects the design of burners for combustion of black liquor since a considerably lower amount of oxygen, air or oxygen enriched air shall be added to the reactor to obtain the desired level of combustion.

The air/fuel ratio (by weight) for some fuels at stoichiometric combustion are exemplified below:

| | | |
|---|---|---|
| Antracite | Air/fuel | 10-12:1 |
| Ethyl alcohol | "- | 9:1 |
| Black liquor | "- | 4-5:1 |
| Diesel oil/heavy oil | "- | 13-15:1 |

The burner designed in the present invention creates a stable flame in a reactor which preferably operates at pressures in the range of 0.1 to 150 bars above ambient and at temperatures in the range of 700 to 1400^{o}C.

Depending on factors such as temperature and flow velocities in the burner and the composition of the liquor, the burner nozzle can in addition to thermal effects be subjected to oxidation and reactions with sulphur which may have a detrimental effect on the degree of atomization. The burner nozzle of the present invention should therefore preferably be cooled by a circulating liquid.

A preferred embodiment of the present invention is to use oxygen or oxygen enriched air as the oxidant. In such a preferred embodiment all or nearly all the the oxygen required for partial commbustion is supplied through the nozzle to support atomization of the spent liquor.

Part of the oxygen containing gas may be added to the reactor through a pipe arranged coaxially around the liquor lance or through one or several gates. To compensate for the low air/fuel ratios and to achieve reasonable gas velocities all the oxygen containing gas should be preheated to at least 100^{o}C, preferably to 300^{o}C and it should further be given a vortex movement, which i.a., can be achieved by passing the gas through vortex blading arranged in the coaxial pipe. The radial flow rate of the oxygen containing gas is thereby markedly affected with a maintained axial flow rate. The main principle of a vortex burner is to recirculate a portion of gases through an internal recirculation zone towards the liquor lance. This internal recirculation zone facilitates combustion and stabilizes the flame and the recirculated hot gases add energy for ignition of the liquor sray. The internal recirculation zone also serves as a depot for heat and reactive gas components.

## Claims

1. Process for partial combustion of cellulose spent liquors using a burner equipped with a liquor lance and an atomizing nozzle, which burner is connected to a reactor operating at pressures in the range of 1.1 to 150 bars while supplying an oxygen containing gas, **characterized** in that the weight ratio between the oxygen containing gas supplied through the burner and the spent liquor supplied through the burner is less than 2:1, and that at least half of the non-fuel bound oxygen required for the partial combustion is discharged into the reactor through the atomizing nozzle.

2. Process according to claim 1, **characterized** in that the weight ratio between the oxygen supplied with the oxygen containing gas and the spent liquor is less than 0.4:1.

3. Process according to claim 1, **characterized** in that more than 80% of the oxygen containing gas required for the partial combustion is supplied through the nozzle.

4. Process according to claim 1, **characterized** in that the oxygen containing gas is substantially oxygen or oxygen enriched air.

5. Process according to one or more of claims 1-4, **characterized** in that the flow velocity of the gas and liquor discharged from the nozzle is between 40 and 350 m/s.

6. Process according to one or more of claims 1 to 5, **characterized** in that the spent liquor and the oxygen containing gas are discharged from the nozzle through at least three symmetrically arranged openings.

7. Process according to one or more of claims 1 to 6**, characterized** in that the spent liquor is discharged from the nozzle through a circular gap or a circular opening.

8. Process according to one or more of claims 1 to 7, **characterized** in that the cellulose spent liquor discharged into the reactor has a temperature above its boiling point at the prevailing reactor pressure.

## Patentansprüche

1. Verfahren zum Teilverbrennen gebrauchter Zelluloselösungen, wobei ein mit einer Lanze und einer Zerstäuberdüse ausgerüsteter Brenner eingesetzt wird, der an einen bei Drücken von 1,1 bis 150 bar arbeitenden Reaktor angeschlossen ist und ein sauerstoffhaltiges Gas zuführt, **dadurch gekennzeichnet**, daß das Gewichtsverhältnis zwischen dem durch den Brenner zugeführten sauerstoffhaltigen Gas und der durch den Brenner zugeführten gebrauchten Zelluloselösung kleiner ist als 2:1, und daß zumindest die Hälfte des zum Teilverbrennen benötigten, nicht brennstoffgebundenen Sauerstoffs durch die Zerstäuberdüse in den Reaktor ausgestoßen wird.

2. Verfahren nach Anspruch 1, dadurch gekennzeichnet, daß das Gewichtsverhältnis zwischen dem mit dem sauerstoffhaltigen Gas zugeführten Sauerstoff und der gebrauchten Zelluloselösung kleiner ist als 0,4:1.

3. Verfahren nach Anspruch 1, dadurch gekennzeichnet, daß mehr als 80 % des für das Teilverbrennen benötigten, sauerstoffhaltigen Gases durch die Zerstäuberdüse zugeführt werden.

4. Verfahren nach Anspruch 1, dadurch gekennzeichnet, daß das sauerstoffhaltige Gas im wesentlichen Sauerstoff oder mit Sauerstoff angereicherte Luft ist.

5. Verfahren nach zumindest einem der Ansprüche 1 bis 4, dadurch gekennzeichnet, daß die Fließgeschwindigkeit des aus der Zerstäuberdüse ausgestoßenen sauerstoffhaltigen Gases und der aus der Zerstäuberdüse ausgestoßenen gebrauchten Zelluloselösung zwischen 40 und 350 m/s beträgt.

6. Verfahren nach zumindest einem der Ansprüche 1 bis 5, dadurch gekennzeichnet, daß die gebrauchte Zelluloselösung und das sauerstoffhaltige Gas von der Zerstäuberdüse durch zumindest drei, symmetrisch angeordnete Öffnungen ausgestoßen werden.

7. Verfahren nach zumindest einem der Ansprüche 1 bis 6, dadurch gekennzeichnet, daß die gebrauchte Zelluloselösung von der Zerstäuberdüse durch einen kreisförmigen Spalt oder eine kreisförmige Öffnung ausgestoßen wird.

8. Verfahren nach zumindest einem der Ansprüche 1 bis 7, dadurch gekennzeichnet, daß die in den Reaktor ausgestoßene, gebrauchte Zelluloselösung eine Temperatur oberhalb ihres Siedepunktes bei dem im Reaktor herrschenden Druck besitzt.

## Revendications

1. Procédé de combustion partielle de liqueurs de cellulose épuisées à l'aide d'un brûleur équipé d'une lance à liqueur et d'une buse d'atomisation, lequel brûleur est relié à un réacteur fonctionnant à des pressions situées dans la plage de 1,1 à 150 bars en fournissant un gaz contenant de l'oxygène, caractérisé en ce que le rapport pondéral entre le gaz contenant de l'oxygène fourni par le brûleur et la liqueur épuisée fournie par le brûleur est inférieur à 2:1, et en ce que la moitié au moins de l'oxygène non lié au combustible qui est nécessaire pour la combustion partielle est introduite dans le réacteur par la buse d'atomisation.

2. Procédé selon la revendication 1, caractérisé en ce que le rapport pondéral entre l'oxygène fourni avec le gaz contenant de l'oxygène et la liqueur épuisée est inférieur à 0,4:1.

3. Procédé selon la revendication 1, caractérisé en ce que plus de 80% du gaz contenant de l'oxygène nécessaire pour la combustion partielle est fourni par la buse.

4. Procédé selon la revendication 1, caractérisé en ce que le gaz contenant de l'oxygène est essentiellement de l'oxygène ou de l'air enrichi en oxygène.

5. Procédé selon une ou plusieurs des revendications 1 à 4, caractérisé en ce que la vitesse d'écoulement du gaz et de la liqueur introduits par la buse est comprise entre 40 et 350 m/s.

6. Procédé selon une ou plusieurs des revendications 1 à 5, caractérisé en ce que la liqueur épuisée et le gaz contenant de l'oxygène sont introduits par la buse au travers d'au moins trois ouvertures agencées symétriquement.

7. Procédé selon une ou plusieurs des revendications 1 à 6, caractérisé en ce que la liqueur épuisée est introduite par la buse au travers d'un interstice circulaire ou d'une ouverture circulaire.

8. Procédé selon une ou plusieurs des revendications 1 à 7, caractérisé en ce que la liqueur de cellulose épuisée introduite dans le réacteur a une température supérieure à son point d'ébullition à la pression régnant dans le réacteur.
